# EUROPEAN PATENT APPLICATION

(11) **EP 2 579 119 A2**
(43) Date of publication of application: **10.04.2013**
(21) Application number: 12187662.7
(22) Date of filing: 08.10.2012
(51) Int. Cl.: G05D 16/16

(54) **Pressure valve controller including a diaphragm retention device**

(30) Priority: 07.10.2011 US 201113269131
(71) Applicant: Hamilton Sundstrand Corporation, Windsor Locks, CT 06096-1010 (US)
(72) Inventor: Labrie, Jason, Southampton, MA Massachusetts 01073 (US); Gage, Marc E., Feeding Hills, MA Massachusetts 01030 (US); Faass, Adam, Middletown, CT Connecticut 06457 (US); Boyd, Linda S., Suffield, CT Connecticut 06078 (US)
(74) Representative: Tomlinson, Kerry John

(57) **Abstract**

A pressure regulating valve controller (2) includes a housing (4). A piston (30) having a surface portion (57,107,157) is arranged in the housing. A spring seat (26) is arranged in the housing adjacent the piston. The spring seat includes a surface section (73,123,173). A diaphragm (50) is arranged in the housing between the surface portion of the piston and the surface section of the spring seat. The diaphragm includes an opening (90,140,190). A diaphragm retention device (80,130,180) is arranged in the opening of the diaphragm. The diaphragm retention device is configured and disposed to contact each of the surface portion of the piston and the surface section of the spring seat to reduce forces on the diaphragm.

## Description

### BACKGROUND OF THE INVENTION

This invention relates to the art of pressure valve controllers and, more particularly, to a diaphragm retention device of a pressure valve controller.

Aircraft employ air management systems to control various other systems including power systems, control systems, and air crew accommodations. Typically, the air management systems include pressure regulating valves (PRVs) that are operated by pressure regulating valve controllers (PRVCs). PRVCs generally include elastomeric diaphragms that provide low friction, zero leakage sealing. The elastomeric diaphragm is usually attached to a piston. More specifically, the diaphragm is compressed between a surface of the piston and a spring seat and held in place using a mechanical fastener.

### BRIEF DESCRIPTION OF THE INVENTION

Disclosed is a pressure regulating valve controller that includes a housing and a piston having a surface portion arranged in the housing. A spring seat is arranged in the housing adjacent the piston. The spring seat includes a surface section. A diaphragm is arranged in the housing between the surface portion of the piston and the surface section of the spring seat. The diaphragm includes an opening. A diaphragm retention device is arranged in the opening of the diaphragm. The diaphragm retention device is configured and disposed to contact each of the surface portion of the piston and the surface section of the spring seat to reduce forces on the diaphragm.

### BRIEF DESCRIPTION OF THE DRAWINGS

The following descriptions should not be considered limiting in any way. With reference to the accompanying drawings, like elements are numbered alike:

FIG. 1 is a cross-sectional view of a pressure regulating valve control including a diaphragm retention device in accordance with an exemplary embodiment;

FIG. 2 is a perspective view of the diaphragm retention device arranged in accordance with one exemplary embodiment;

FIG. 3 is a perspective view of the diaphragm retention device arranged in accordance with another exemplary embodiment; and

FIG. 4 is a perspective view of the diaphragm retention device arranged in accordance with still another exemplary embodiment.

### DETAILED DESCRIPTION

A detailed description of one or more embodiments of the disclosed apparatus and method are presented herein by way of exemplification and not limitation with reference to the Figures.

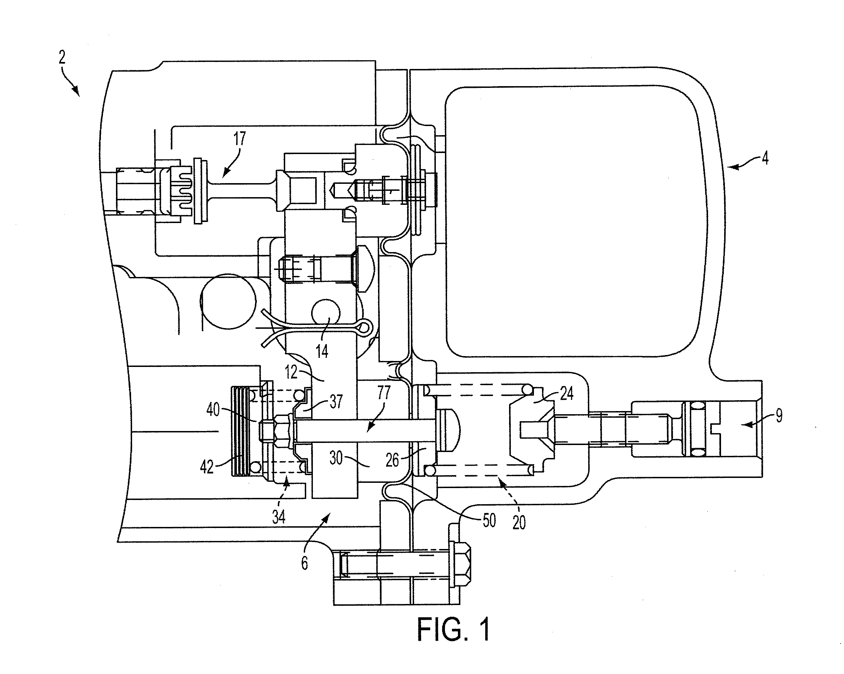

FIG. 1 illustrates a pressure regulating valve controller (PRVC) 2 in accordance with an exemplary embodiment. In accordance with an exemplary embodiment, PRVC 2 forms part of an aircraft air management system (not shown) and is configured to establish a desired position of a pressure regulating valve (PRV) (also not shown) PRVC 2 includes a housing 4 within which is arranged a signal control assembly 6. Signal control assembly 6 provides position signals to the PRV. Signal control assembly 6 includes an adjustor member 9 that establishes a pre-set position for a control lever 12. Control lever 12 pivots about a pin 14 to act on a poppet nozzle 17 to control signals to the PRV.

Adjustor member 9 includes an adjustor or tensioning spring 20 that is arranged between a first spring seat 24 and a second spring seat 26. Second spring seat 26 acts upon a piston 30 to establish the pre-set position of control lever 12. Forces on control lever 12 provided by piston 30 are counter-acted or opposed by a load spring 34 that is arranged between a third spring seat 37 and a fourth spring seat 40. Fourth spring seat 40 is supported by bimetallic discs 42 that provide correction for changes in temperature. With this arrangement, load spring 34 and adjustor spring 20 cooperate to establish the pre-set position of control lever 12. Control lever 12 is also acted upon by a diaphragm 50 that applies a force to piston 30. As will be discussed more fully below, diaphragm 50 is positioned in such a way so as to avoid one or both of creep and a compression set created over time through compressive forces applied by second spring seat 26 and piston 30. Creep and/or compression set can lead to problems with PRVC 2 that could result in costly delays and repair.

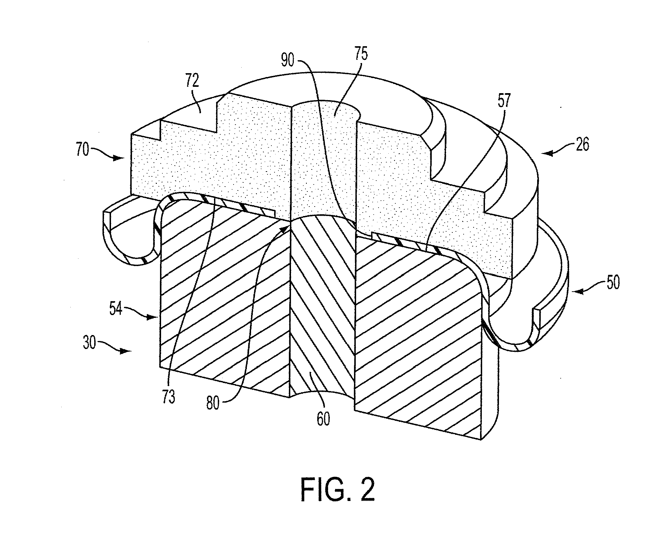

In accordance with the embodiment illustrated in FIG. 2 and with continued reference to FIG. 1, piston 30 includes a piston body 54 having a surface portion 57 and a central bore 60. Second spring seat 26 includes a spring seat body 70 having a first surface section 72 and a second surface section 73 between which extends a central passage 75. Central passage 75 aligns with central bore 60 to allow passage of a fastener 77. Second spring seat 26 includes a diaphragm retention device 80 that is integrally formed with second surface section 73. Diaphragm retention device 80 is positioned within an opening 90 formed in diaphragm 50. In one embodiment, diaphragm retention device 80 substantially limits creep and compression set to diaphragm 50. In this manner, a length of adjustor spring 20 or load spring 34 will not change due to creep or compression set over a period of time. Limiting changes in the length of adjustor spring 20 and/or load spring 34 constrains a bias rotation of control lever 12 about pivot pin 14. Constraining the bias movement of control lever 12 will prevent a bias output signal to the PRV.

In accordance with the illustrated embodiment, diaphragm 50 includes a first thickness (not separately labeled) and retention device 80 includes a second thickness (also not separately labeled). In one embodiment, the first thickness is substantially equal to the second thickness. In another embodiment, the second thickness is smaller than the first thickness. However, it should be understood that some limited compression of diaphragm 50 is provided to maintain sealing. Retention device 80 defines the spacing between the surface portion 57 and the surface section 73 and so provides a continually fixed degree of compression on diaphragm 50. Regardless of the arrangement, diaphragm retention device 80 is configured to maintain a desired position of diaphragm 50 between piston 30 and second spring seat 26 and also to partially alleviate compression forces upon diaphragm 50 to reduce compression setting.

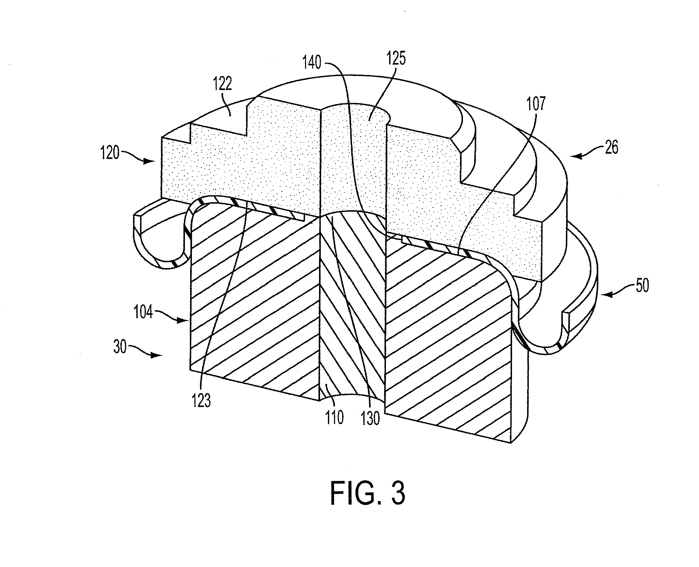

In accordance with another embodiment as illustrated in FIG. 3, wherein like reference numbers represent corresponding parts in the respective views, piston 30 includes a piston body 104 having a surface portion 107 and a central bore 110. Second spring seat 26 includes a spring seat body 120 having a first surface section 122 and a second surface section 123 between which extends a central passage 125. Central passage 125 aligns with central bore 110 to allow passage of fastener 77. In the exemplary embodiment shown, piston 30 includes a diaphragm retention device 130 that is integrally formed with surface portion 107. Diaphragm retention device 130 is positioned within an opening 140 formed in diaphragm 50. Diaphragm retention device 130 substantially limits one or more of creep and compression set to diaphragm 50. In this manner, a length of adjustor spring 20 or load spring 34 will not change due to creep or compression set over a period of time. Limiting changes in the length of adjustor spring 20 and/or load spring 34 constrains a bias rotation of control lever 12 about pivot pin 14. Constraining the bias movement of control lever 12 will prevent a bias output signal to the PRV.

In the illustrated embodiment of FIG. 3, diaphragm 50 includes a first thickness (not separately labeled) and retention device 130 includes a second thickness (also not separately labeled). As above, the first thickness can be substantially equal to or greater than the second thickness. In this manner retention device 130 defines the spacing between the surface portion 107 and the surface section 123 and so provides a continually fixed degree of compression on the diaphragm. Regardless of the arrangement, diaphragm retention device 130 is configured to maintain a desired position of diaphragm 50 between piston 30 and second spring seat 26 and also partially alleviate compression forces upon diaphragm 50 to reduce compression setting.

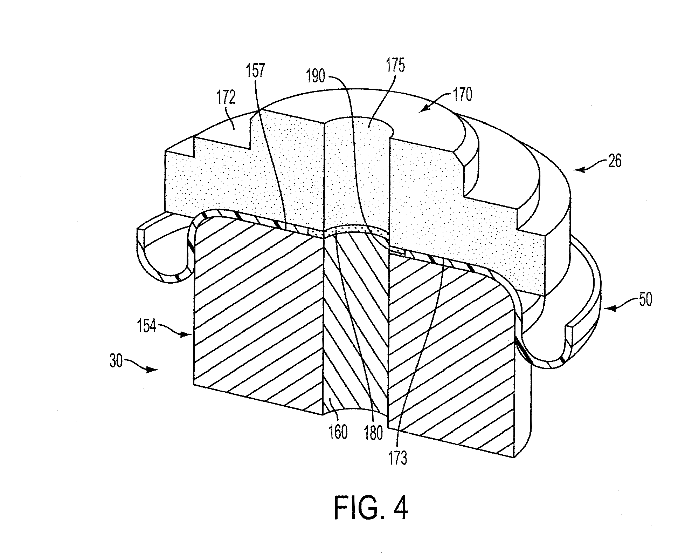

In accordance with another embodiment and as illustrated in FIG. 4, wherein like reference numbers represent corresponding parts in the respective views, piston 30 includes a piston body 154 having a surface portion 157 and a central bore 160. Second spring seat 26 includes a spring seat body 170 having a first surface section 172 and a second surface section 173 between which extends a central passage 175. Central passage 175 aligns with central bore 160 to allow passage of fastener 77. A diaphragm retention device 180 is positioned between second surface section 173 and surface portion 157. Diaphragm retention device 180 is positioned within an opening 190 formed in diaphragm 50. Diaphragm retention device 180 substantially limits one or both of creep and compression set to diaphragm 50. In this manner, a length of adjustor spring 20 or load spring 34 will not change due to creep or compression set over a period of time. Limiting changes in the length of adjustor spring 20 and/or load spring 34 constrains a bias rotation of control lever 12 about pivot pin 14. Constraining the bias movement of control lever 12 will prevent a bias output signal to the PRV.

In accordance with embodiment of FIG. 4, diaphragm 50 includes a first thickness (not separately labeled) and retention device 180 includes a second thickness (also not separately labeled). In accordance with the exemplary embodiment, the first thickness is substantially equal to the second thickness. In accordance with another exemplary embodiment, the second thickness is less than the first thickness. In this manner, retention device 180 defines the spacing between the surface portion 157 and the surface section 173 and so provides a continually fixed degree of compression on the diaphragm. Regardless of the arrangement, diaphragm retention device 180 is configured to maintain a desired position of diaphragm 50 between piston 30 and second spring seat 26 and also partially alleviates compression forces upon diaphragm 50 to reduce compression setting.

At this point it should be understood that the exemplary embodiments provide a device for limiting one or both of diaphragm creep and a compression set to the diaphragm to enhance component life and reduce failures which may result in costly delays. Also, while described above as being integrally formed with the piston, the spring seat, or as a stand alone component, it should be understood that the diaphragm retention device could also be incorporated as a shoulder formed on the fastener that secures the system to the control lever.

While the invention has been described with reference to an exemplary embodiment or embodiments, it will be understood by those skilled in the art that various changes may be made and equivalents may be substituted for elements thereof without departing from the scope of the invention, which is defined by the claims. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

## Claims

1. A pressure regulating valve controller comprising:
a housing;
a piston arranged in the housing, the piston including a surface portion;
a spring seat arranged in the housing adjacent the piston, the spring seat including a surface section;
a diaphragm arranged in the housing between the surface portion of the piston and the surface section of the spring seat, the diaphragm including an opening; and
a diaphragm retention device arranged in the opening of the diaphragm, the diaphragm retention device being configured and disposed to contact each of the surface portion of the piston and the surface section of the spring seat to reduce forces on the diaphragm.

2. The pressure regulating valve controller according to claim 1, wherein the diaphragm includes a first thickness and the diaphragm retention device includes a second thickness, the first thickness being substantially equal to the second thickness.

3. The pressure regulating valve controller according to claim 1, wherein the diaphragm includes a first thickness and the diaphragm retention device includes a second thickness, the second thickness being less than the first thickness.

4. The pressure regulating valve controller according to claim 1, 2 or 3, wherein the diaphragm retention device is integrally formed with the surface portion of the piston.

5. The pressure regulating valve controller according to claim 1, 2 or 3, wherein the diaphragm retention device is integrally formed with the surface section of the spring seat.

6. The pressure regulating valve controller according to any preceding claim, wherein the piston includes a central bore and the spring seat includes a central passage that align with the opening of the diaphragm.

7. The pressure regulating valve controller according to claim 6, further comprising:
a fastener extending through the central passage, opening, and central bore, the fastener being configured and disposed to establish a compressive force on the spring seat that passes to the piston through the diaphragm retention device.
